# EUROPÄISCHE PATENTSCHRIFT

(11) **EP 1 544 435 B1**
(45) Veröffentlichungstag und Bekanntmachung des Hinweises auf die Patenterteilung: **27.12.2006**
(21) Anmeldenummer: 04027048.0
(22) Anmeldetag: 13.11.2004
(51) Int. Cl.: F02B 67/06, F16D 43/16, F16D 43/18

(54) **Antriebsübertragungseinrichtung, insbesondere für Kraftfahrzeuge**
Power transmission device, particularly for vehicles
Dispositif de transmission de puissance, notamment pour véhicules

(30) Priorität: 18.12.2003 DE 10359632
(43) Veröffentlichungstag der Anmeldung: 22.06.2005
(73) Patentinhaber: Schaeffler KG, 91074 Herzogenaurach (DE)
(72) Erfinder: Wiesneth, Bernhard, 91054 Erlangen (DE); Hochmuth, Harald, 91469 Hagenbüchach (DE)

(56) Entgegenhaltungen:
- EP-A- 0 068 730
- DE-C- 273 197
- GB-A- 2 265 191
- US-A- 4 296 717
- US-A- 5 665 018

## Beschreibung

### Gebiet der Erfindung

Die Erfindung betrifft eine Antriebsübertragungseinrichtung, insbesondere für Kraftfahrzeuge, mit einer über einen motorgetriebenen Riemenantrieb antreibbaren Riemenscheibe, die gegenüber einem an einer Welle eines Generators, insbesondere eines Startergenerators festlegbaren oder festgelegten Wellenring freilaufend ist.

### Hintergrund der Erfindung

In Zugmitteltrieben, bei denen ein Antriebsmoment von einem ersten Antriebsaggregat, beispielsweise einem Verbrennungsmotor wie z. B. einem Kraftfahrzeugmotor auf ein weiteres Aggregat, z. B. einen Generator zur Energieerzeugung übertragen werden soll, wird bekanntlich eine Antriebsübertragungseinrichtung mit einer Freilauf-Riemenscheibe eingesetzt. Über den Freilauf der Riemenscheibe bezüglich des Wellenrings, der an der Welle des Generators festgelegt ist, ist es möglich, sich aus dem Betrieb der ersten Antriebseinrichtung ergebende Unregelmäßigkeiten im Antrieb zu kompensieren. Bei Verbrennungsmotoren ist bekannt, dass seine verschiedenen Takte zu einer ungleichförmigen Antriebsbewegung des Riemens, über den die Riemenscheibe und über diese wiederum der Generator angetrieben wird, führen. Über den Freilauf der Riemenscheibe wird es nun ermöglicht, die Riemenscheibe von der Generatorwelle bei einer zu bestimmten Taktzeiten auftretenden Verzögerung des Riemens, wenn dieser also langsamer wird, abzukoppeln, das heißt, die Momentenübertragung wird temporär unterbunden, die Generatormasse wird abgekoppelt. Sobald taktbedingt der Riemen und mit ihm die Riemenscheibe wieder beschleunigt wird, sperrt der Freilauf erneut und es kommt wieder zur festen Verbindung zwischen der Riemenscheibe und der Welle, wodurch wieder Kraft auf die Generatorwelle übertragen und der generatorische Betrieb aktiv fortgesetzt werden kann. Eine solche Antriebsübertragungseinrichtung ist z. B. aus DE 195 25 744 A1 bekannt. Die dort bekannte Antriebsübertragungseinrichtung lässt jedoch einen Antrieb nur in einer Richtung bezogen auf die vorgegebene Rotationsrichtung zu, nämlich über die Riemenscheibe auf den Wellenring. Zunehmend aber wird insbesondere in der Automobilindustrie auch zur Reduzierung des Treibstoffverbrauchs der Einsatz eines riemengetriebenen Startergenerators favorisiert. Dieser Startergenerator dient einerseits als Anlasser, um die Brennkraftmaschine zu starten, zum anderen dient er bei laufendem Motor als Generator, der die Stromversorgung der Verbraucher sicherstellt. Ihm kommt also eine Doppelfunktion zu.

### Zusammenfassung der Erfindung

Der Erfindung liegt damit das Problem zugrunde, eine Antriebsübertragungseinrichtung anzugeben, die die Momenten- oder Kraftübertragung in beide Richtungen bei gleichzeitiger Entkopplungsmöglichkeit zulässt.

Zur Lösung dieses Problems ist bei einer erfindungsgemäßen Antriebsübertragungseinrichtung vorgesehen, dass der Wellenring und die Riemenscheibe über eine Fliehkraftkupplung derart gekoppelt sind, dass bei aktivem Antrieb des Wellenrings über den Generator, insbesondere den Startergenerator bei geschlossener Fliehkraftkupplung das in den Wellenring eingeleitete Drehmoment an die Riemenscheibe übertragbar ist, wobei sich die Fliehkraftkupplung bei Erreichen einer Grenzdrehzahl öffnet und den Wellenring von der Riemenscheibe entkoppelt.

Die erfindungsgemäße Antriebsübertragungseinrichtung lässt bei konstruktiv einfacher Auslegung einen Kraft- oder Momenteneintrag sowohl über die Riemenscheibe auf den Wellenring als auch über den Wellenring auf die Riemenscheibe zu. Zur Momenten- oder Kraftkopplung bei Antrieb des Wellenrings ist erfindungsgemäß eine Fliehkraftkupplung vorgesehen, über die der Wellenring und die Riemenscheibe kraftschlüssig gekoppelt sind. Wird der Wellenring, der auf einer Generatorwelle sitzt, angetrieben, so wird bei geschlossener Fliehkraftkupplung die Riemenscheibe mitgenommen und über den über sie laufenden Riemen beispielsweise auch der Verbrennungsmotor angetrieben. Sobald die Drehzahl der Riemenscheibe und mit ihr des Wellenrings eine Grenzdrehzahl erreicht, öffnet sich die Fliehkraftkupplung, so dass Wellenring und Riemenscheibe entkoppelt werden. Diese Grenzdrehzahl wird dann erreicht, wenn der Motor gestartet ist und die Riemenscheibe über den Motor angetrieben wird, mithin also eine Drehzahlerhöhung durch den motorischen Antrieb sichergestellt ist. Die Riemenscheibe kann nun aufgrund ihrer Freilaufkopplung mit dem Wellenring ihre normale Funktion, nämlich die Generatorwelle zum eigentlichen Generatorbetrieb anzutreiben bei gleichzeitiger, über den Freilauf möglichen Abkopplung zur Dämpfung von Unregelmäßigkeiten, erfüllen. Nimmt die Drehzahl wieder ab, was in der Regel bei Ausschalten des Motors der Fall ist, so schließt sich bei Unterschreiten der Grenzdrehzahl die Fliehkraftkupplung, wodurch der Wellenring und die Riemenscheibe wieder miteinander gekoppelt sind und ein erneuter Startvorgang möglich ist.

Die Fliehkraftkupplung kann erfindungsgemäß zwei gegeneinander drehbewegliche Kupplungsringe, von denen einer verdrehfest bezüglich des Wellenrings und der andere verdrehfest bezüglich der Riemenscheibe angeordnet ist, und mehrere am scheibenseitigen Kupplungsring gegen eine Rückstellkraft fliehkraftbedingt bewegbare Koppelelemente, die zur Kopplung in am wellenseitigen Kupplungsring vorgesehene Elementaufnahmen eingreifen, aufweisen. Die beiden gegeneinander drehbeweglichen Kupplungsringe sind zweckmäßigerweise direkt auf dem Wellenring bzw. direkt in der Riemenscheibe verdrehsicher aufgenommen, z. B. aufgepresst oder über Passfedern gehalten. Die Rückstellkraft, die zweckmäßigerweise über ein jedem Koppelelement zugeordnetes Federelement, insbesondere eine Spiralfeder erzeugt wird, ist dabei im Hinblick auf die zu erreichende Grenzdrehzahl, bei der die Kupplung öffnen soll, ausgelegt. Zur Auslegung ist auch die Anzahl der Koppelelemente zu berücksichtigen, die letztlich beliebig sein kann. In jedem Fall sollten die Koppelelemente symmetrisch, also mit gleicher Teilung verteilt positioniert sein.

Die Kopplungselemente können nach einer ersten Erfindungsalternative Kugeln sein, die in am wellenseitigen Kupplungsring ausgebildete kalottenförmige Elementaufnahmen eingreifen. Alternativ sind auch Zapfen mit einem gerundeten freien Ende denkbar, die in am wellenseitigen Kupplungsring ausgebildete kalottenförmige Elementaufnahmen eingreifen. Neben diesen beiden Ausführungsformen sind auch andere Geometrien der Koppelelemente denkbar. So ist eine gerundete Endform der Zapfen nicht zwingend erforderlich, diese können auch zylindrisch sein. Die Elementaufnahmen sind in jedem Fall der Form der in sie eingreifenden Enden der Koppelelemente entsprechend auszubilden.

Zur Ermöglichung einer fliehkraftbedingten, radial nach außen gerichteten Bewegung der Koppelelemente sind am scheibenseitigen Kupplungsring entsprechend symmetrisch gesetzte, radial verlaufende Bohrungen vorgesehen, in denen jeweils ein die Rückstellkraft erzeugendes Federelement sowie ein Koppelelement aufgenommen sind. Das heißt, die Koppelelemente gleich welcher Ausführungsform bewegen sich fliehkraftbedingt radial nach außen in die Bohrung und gegen das Federelement, das neben einer Ausbildung als Spiralfeder auch als federnder Elastomerblock oder dergleichen ausgeführt sein kann.

Zweckmäßig ist es ferner, wenn am wellenseitigen Kupplungsring eine die Elementaufnahmen verbindende Führungsrille für die Koppelelemente vorgesehen ist. Diese Führungsrille dient dazu, die Verriegelungsstellung, die einen Antrieb über den Generator zulässt, selbständig zu finden. Die Führungsrille, die in ihrer Querschnittsform zweckmäßigerweise der Form der freien Ende der Koppelelemente angepasst ist, ermöglicht eine sichere Führung der Koppelelemente in die jeweilige Elementaufnahme, wo sie bei Erreichen einrasten. Dabei ist es besonders zweckmäßig, wenn die Führungsrille über eine Einlauframpe in jede Elementaufnahme läuft, wobei diese Einlauframpe in Laufrichtung der Koppelelemente zu den Elementaufnahmen führt.

### Kurze Beschreibung der Zeichnungen

Weitere Vorteile, Merkmale und Einzelheiten der Erfindung ergeben sich aus dem im folgenden beschriebenen Ausführungsbeispiel sowie anhand der Zeichnungen. Dabei zeigen:
- Figur 1: eine schematisch Darstellung einer erfindungsgemäßen Antriebsübertragungseinrichtung mit verriegelter Fliehkraftkupplung im Schnitt,
- Figur 2: eine Ansicht in Richtung der Linie II - II in Fig. 1,
- Figur 3: eine schematische Darstellung der erfindungsgemäßen Antriebsübertragungseinrichtung mit geöffneter Fliehkraftkupplung im Schnitt,
- Figur 4: eine Ansicht entlang der Linie IV - IV in Fig. 3,
- Figur 5: einen Längsschnitt durch den wellenringseitigen Kugelring, und
- Figur 6: eine Querschnittdarstellung durch den wellenseitigen Kupplungsring.

### Detaillierte Beschreibung der Zeichnungen

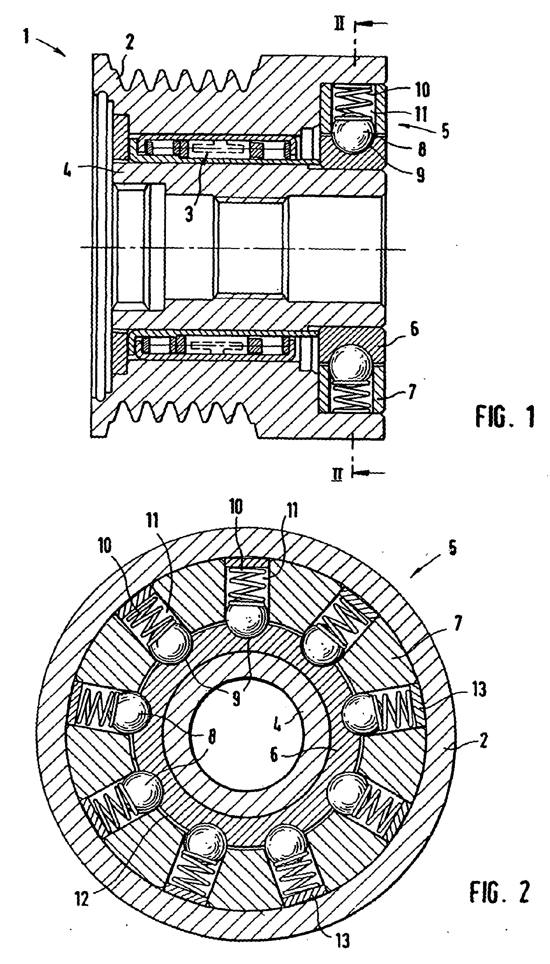

Fig. 1 zeigt in Form einer schematischen Schnittdarstellung eine erfindungsgemäße Antriebsübertragungseinrichtung 1, bestehend aus einer Riemenscheibe 2, die über eine Freilaufkupplung 3, die in ihrem Aufbau hinlänglich bekannt ist und verschiedenartig konfiguriert sein kann, mit einem Wellenring 4 gekoppelt ist. Der Wellenring 4 wird auf einer nicht näher gezeigten Generatorwelle drehfest festgelegt. Daneben sind die Freilauf-Riemenscheibe 2 und der Wellenring 4 über eine Fliehkraftkupplung 5 miteinander entkoppelbar gekoppelt. Die Fliehkraftkupplung 5 umfasst einen ersten wellenringseitig angeordneten Kupplungsring 6, der im gezeigten Ausführungsbeispiel unmittelbar auf dem Wellenring 4 verdrehsicher sitzt, beispielsweise auf diesen aufgepresst ist oder über eine Passfederanordnung verdrehfest gehalten ist. Ferner umfasst die Fliehkraftkupplung 5 einen zweiten riemenscheibenseitigen Kupplungsring 7, der am Innenumfang der Riemenscheibe 2 verdrehfest aufgenommen ist, auch er kann eingepresst, eingeschrumpft oder über Passfedern gehalten sein. Beide Kupplungsringe 6, 7 sind gegeneinander drehbeweglich. Um sie jedoch zur gemeinsamen Bewegung miteinander zu koppeln, sind Koppelelemente 8 im gezeigten Ausführungsbeispiel in Form von Kugeln vorgesehen, die zur kraftschlüssigen Kopplung in am wellenseitigen Kupplungsring 6 vorgesehene kalottenförmige Elementaufnahmen 9, die also der Form der Koppelelemente 8 entsprechend ausgeführt sind, eingreifen. Jedes Koppelelement 8, also jede Kugel ist gegen eine Rückstellkraft, die über ein Federelement 10, hier eine Spiralfeder erzeugt wird, fliehkraftbedingt radial nach außen bewegbar. Zur Ermöglichung der Bewegung und zur Aufnahme der Rastmimik bestehend aus dem Koppelelement 8 und dem Federelement 10 sind am scheibenseitigen Kupplungsring 7 radial nach außen gerichtete Bohrungen 11 vorgesehen.

Fig. 2 zeigt in vergrößerter Darstellung die Ausbildung der Fliehkraftkupplung 5 in Form einer seitlichen Schnittansicht in Richtung der Schnittlinie II - II in Fig. 1. Gezeigt ist zum einen der Wellenring 4, auf dem der erste Kupplungsring 6 sitzt. An diesem sind erkennbar die kalottenförmigen Elementaufnahmen 9 ausgebildet. Über einen schmalen Luftspalt 12 beabstandet ist der zweite riemenscheibenseitig gehalterte Kugelring 7 gezeigt, mit seinen radial nach außen laufenden Bohrungen 11, in denen zum einen jeweils ein Federelement 10, zum anderen jeweils ein Koppelelement 8 in Form einer Kugel aufgenommen ist. Die Bohrungen 11 sind über Abschlusseinsätze 13 nach außen geschlossen, gegen welche Abschlusseinsätze 13 die Federelemente gelagert sind. In der in Fig. 2 gezeigten Stellung befinden sich die Koppelelemente 8 in Eingriff mit dem Elementaufnahmen 9, das heißt, die beiden Kupplungsringe 6, 7 sind kraft- und formschlüssig miteinander gekoppelt, die Fliehkraftkupplung 5 ist geschlossen.

In diesem Zustand, der bei einem Kraftfahrzeug dann eingenommen wird, wenn der Motor ausgeschalten ist, wird nun während des Motorstarts über den Startergenerator die nicht näher gezeigte Generatorwelle angetrieben. Dies führt dazu, dass - nachdem der Wellenring 4 verdrehfest auf der Generatorwelle aufsitzt - über die geschlossene Fliehkraftkupplung 5 auch die Riemenscheibe 2 gedreht wird und das Antriebsmoment über den Riemen an den Verbrennungsmotor übertragen wird. Denn die geschlossene Fliehkraftkupplung und die eingerasteten Koppelelemente 8 in Form der Kugeln lassen eine Übertragung des Startmoments auf die Riemenscheibe zu.

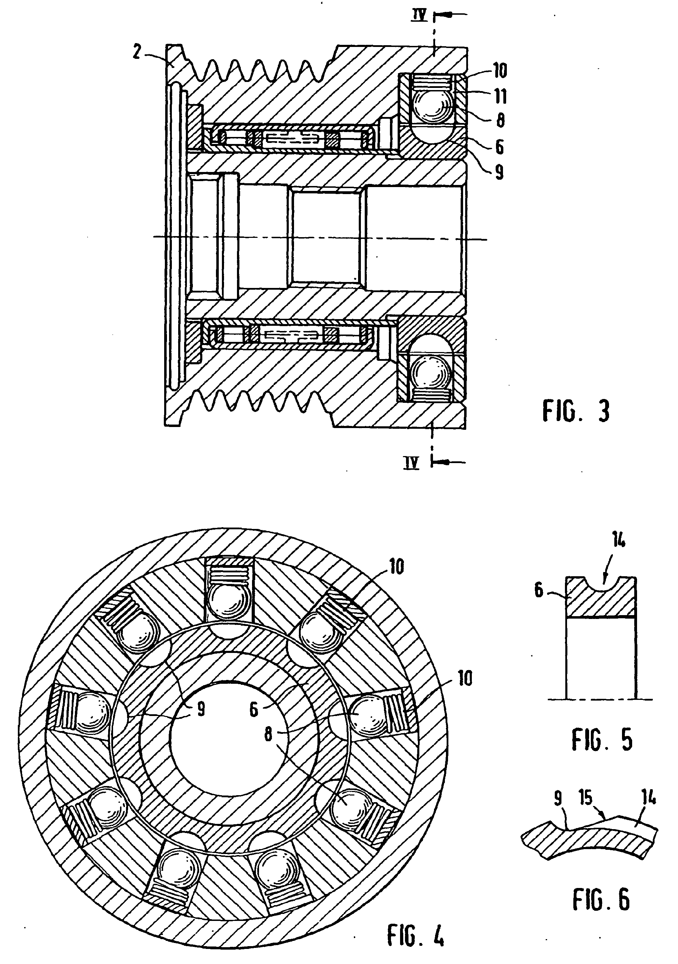

Sobald der Motor gestartet ist, überholt die Riemenscheibendrehzahl die Generatorwellendrehzahl, das heißt, das Antriebsmoment wird nachfolgend von der Riemenscheibe her übertragen. Nach Erreichen einer Grenzdrehzahl bewegen sich nun fliehkraftbedingt die Koppelelemente 8 gegen die Federelemente 10 in der Bohrung 11 nach außen und damit außer Eingriff mit den Elementaufnahmen 9 am Kupplungsring 6. Die Fliehkraftkupplung hat geöffnet, die Riemenscheibe 2 kann nun entkoppelt zum Wellenring 4 und damit zur Generatormasse drehen. Die geöffnete Fliehkraftkupplung 5 zeigt Fig. 4.
Sobald insbesondere nach Abstellen des Motors die Drehzahl abnimmt und die Grenzdrehzahl unterschreitet, bewegen sich die Koppelelemente 8 durch Entspannen der vorgespannten Federelemente 10 wieder radial gesehen nach innen und nehmen die Verriegelungsstellung, wie sie in den Fig. 1 und 2 gezeigt ist, ein. Die Fliehkraftkupplung ist geschlossen, die Antriebsübertragungseinrichtung befindet sich erneut in der Motorstartposition.

Zum selbsttätigen Einnehmen der Verriegelungsstellung ist, siehe die in Fig. 5 gezeigte Schnittansicht durch den Kupplungsring 6, eine Führungsrille 14 an der Ringaußenseite, die sich zu den Koppelelementen 8 öffnet, vorgesehen, in der die Koppelelemente 8 zunächst laufen, bis sie in die in Drehrichtung, die von der vorlaufenden Riemenscheibe 2 definiert wird, jeweils nachfolgenden Elementaufnahmen 9 eingreifen. Zu diesem Zweck mündet die Führungsrille 14 in eine Einlauframpe 15, die ihrerseits in die Elementaufnahmen 9 läuft. Hierüber wird eine sichere Führung der Koppelelemente 8 zu den Elementaufnahmen gewährleistet, nachdem die beiden Kupplungsringe 6, 7 bei Unterschreiten der Grenzdrehzahl in der Regel bezogen auf die Eingriffsstellung verdreht zueinander stehen, bedingt durch die aufgrund des Freilaufs der Riemenscheibe 2 unterschiedlichen Rotationen der Riemenscheibe 2 und des Wellenrings 4.

In den Ausführungsbeispielen weist die Fliehkraftkupplung 5 neun Koppelelemente 8 auf, die, siehe die Fig. 2 und 4, mit gleicher Winkelteilung symmetrisch verteilt sind. Selbstverständlich können auch mehr oder weniger Koppelelemente vorgesehen sein, je nach Auslegung der Fliehkraftkupplung im Hinblick auf den konkreten Einsatzzweck.

### Bezugszahlen

- 1: Antriebsübertragungseinrichtung
- 2: Riemenscheibe
- 3: Freilaufkupplung
- 4: Wellenring
- 5: Fliehkraftkupplung
- 6: Kupplungsring
- 7: Kupplungsring
- 8: Koppelelemente
- 9: Elementaufnahmen
- 10: Federelement
- 11: Bohrungen
- 12: Luftspalt
- 13: Abschlusseinsätze
- 14: Führungsrille
- 15: Einlauframpe

## Patentansprüche

1. Antriebsübertragungseinrichtung, insbesondere für Kraftfahrzeuge, mit einer über einen motorgetriebenen Riemenantrieb antreibbaren Riemenscheibe, die gegenüber einem an einer Welle eines Generators, insbesondere eines Startergenerators festlegbaren Wellenring freilaufend ist, **dadurch gekennzeichnet, dass** der Wellenring (4) und die Riemenscheibe (2) über eine Fliehkraftkupplung (5) derart gekoppelt sind, dass bei aktivem Antrieb des Wellenrings (4) über den Generator, insbesondere den Startergenerator bei geschlossener Fliehkraftkupplung (5) das in den Wellenring (4) eingeleitete Drehmoment an die Riemenscheibe (2) übertragbar ist, wobei sich die Fliehkraftkupplung (5) bei Erreichen einer Grenzdrehzahl öffnet und den Wellenring (4) von der Riemenscheibe (2) entkoppelt.

2. Antriebsübertragungseinrichtung nach Anspruch 1, **dadurch gekennzeichnet, dass** die Fliehkraftkupplung (5) zwei gegeneinander drehbewegliche Kupplungsringe (6, 7), von denen einer (6) verdrehfest bezüglich des Wellenrings (4) und der andere (7) verdrehfest bezüglich der Riemenscheibe (2) angeordnet ist, und mehrere am scheibenseitigen Kupplungsring (7) gegen eine Rückstellkraft fliehkraftbedingt bewegbare Koppelelemente (8), die zur Kopplung in am wellenseitigen Kupplungsring (6) vorgesehene Elementaufnahmen (9) eingreifen, aufweist.

3. Antriebsübertragungseinrichtung nach Anspruch 2, **dadurch gekennzeichnet, dass** die Koppelelemente (8) Kugeln sind, die in am wellenseitigen Kupplungsring (6) ausgebildete kalottenförmige Elementaufnahmen (9) eingreifen.

4. Antriebsübertragungseinrichtung nach Anspruch 2, **dadurch gekennzeichnet, dass** die Koppelelemente (8) Zapfen, vorzugsweise mit einem gerundeten freien Ende sind, die in am wellenseitigen Kupplungsring (6) ausgebildete, vorzugsweise kalottenförmige Elementaufnahmen (9) eingreifen.

5. Antriebsübertragungseinrichtung nach einem der Ansprüche 2 bis 4, **dadurch gekennzeichnet, dass** jedes Koppelelement (8) gegen ein die Rückstellkraft erzeugendes Federelement (10), insbesondere eine Spiralfeder bewegbar ist.

6. Antriebsübertragungseinrichtung nach einem der Ansprüche 2 bis 5, **dadurch gekennzeichnet, dass** am scheibenseitigen Kupplungsring (7) radial verlaufende Bohrungen (11) vorgesehen sind, in denen jeweils ein die Rückstellkraft erzeugendes Federelement (10) sowie ein Koppelelement (8) aufgenommen sind.

7. Antriebsübertragungseinrichtung nach einem der Ansprüche 2 bis 6, **dadurch gekennzeichnet, dass** die Koppelelemente (8) mit gleicher Teilung verteilt angeordnet sind.

8. Antriebsübertragungseinrichtung nach einem der Ansprüche 2 bis 7, **dadurch gekennzeichnet, dass** am wellenseitigen Kupplungsring (6) eine die Elementaufnahmen (9) verbindende Führungsrille (14) für die Koppelelemente (8) vorgesehen ist.

9. Antriebsübertragungseinrichtung nach Anspruch 8, **dadurch gekennzeichnet, dass** die Führungsrille (14) über eine Einlauframpe (15) in jede Elementaufnahme (9) läuft.

## Claims

1. Drive transmission device, in particular for motor vehicles, having a pulley which can be driven by means of an engine-driven belt drive and is free-running relative to a shaft ring which can be fastened to a shaft of a generator, in particular of a starter-generator, **characterized in that** the shaft ring (4) and the pulley (2) are coupled by means of a centrifugal clutch (5) in such a way that, when the shaft ring (4) is actively driven by means of the generator, in particular the starter-generator, and when the centrifugal clutch (5) is closed, the torque introduced into the shaft ring (4) can be transmitted to the pulley (2), with the centrifugal clutch (5) opening, and decoupling the shaft ring (4) from the pulley (2), when a limit speed is reached.

2. Drive transmission device according to Claim 1, **characterized in that** the centrifugal clutch (5) has two clutch rings (6, 7) which can rotate relative to one another, one (6) of which being arranged so as to be rotationally fixed relative to the shaft ring (4) and the other (7) being arranged so as to be rotationally fixed relative to the pulley (2), and has a plurality of coupling elements (8) on the pulley-side clutch ring (7), said coupling elements (8) being moveable counter to a restoring force as a result of a centrifugal force, and said coupling elements (8) engaging, in order to provide coupling, in element receptacles (9) which are provided in the shaft-side clutch ring (6).

3. Drive transmission device according to Claim 2, **characterized in that** the coupling elements (8) are balls which engage in dome-shaped element receptacles (9) formed in the shaft-side clutch ring (6) .

4. Drive transmission device according to Claim 2, **characterized in that** the coupling elements (8) are pins, preferably having a rounded free end, which engage in preferably dome-shaped element receptacles (9) formed in the shaft-side clutch ring (6).

5. Drive transmission device according to one of Claims 2 to 4, **characterized in that** each coupling element (8) can move counter to a spring element (10), in particular a spiral spring, which generates the restoring force.

6. Drive transmission device according to one of Claims 2 to 5, **characterized in that** radially-running bores (11) are provided in the pulley-side clutch ring (7), with one spring element (10) which generates the restoring force and one coupling element (8) being held in each of said bores (11).

7. Drive transmission device according to one of Claims 2 to 6, **characterized in that** the coupling elements (8) are arranged so as to be distributed with equal pitch.

8. Drive transmission device according to one of Claims 2 to 7, **characterized in that** a guide groove (14) which connects the element receptacles (9) is provided, for the coupling elements (8), in the shaft-side clutch ring (6).

9. Drive transmission device according to Claim 8, **characterized in that** the guide groove (14) runs into each element receptacle (9) via a run-in ramp (15).

## Revendications

1. Dispositif de transmission de puissance, notamment pour des véhicules automobiles, avec une poulie de courroie qui peut être entraînée au moyen d'un entraînement motorisé à courroie et qui est en roue libre par rapport à une bague d'arbre pouvant être fixée sur un arbre d'une génératrice, notamment d'un démarreur-dynamo, **caractérisé en ce que** la bague d'arbre (4) et la poulie de courroie (2) sont couplées par l'intermédiaire d'un accouplement centrifuge (5) de telle sorte que, lorsque la bague d'arbre (4) est activement entraînée au moyen de la génératrice, notamment du démarreur-dynamo, et que l'accouplement centrifuge (5) est fermé, le couple de rotation introduit dans la bague d'arbre (4) peut être transmis à la poulie de courroie (2), sachant que l'accouplement centrifuge (5) s'ouvre à l'atteinte d'une vitesse de rotation limite et désaccouple la bague d'arbre (4) de la poulie de courroie (2).

2. Dispositif de transmission de puissance selon la revendication 1, **caractérisé en ce que** l'accouplement centrifuge (5) présente deux bagues d'accouplement (6, 7) mobiles en rotation l'une par rapport à l'autre, dont l'une (6) est disposée solidairement en rotation par rapport à la bague d'arbre (4) et l'autre (7) solidairement en rotation par rapport à la poulie de courroie (2), et plusieurs éléments d'accouplement (8) mobiles sur la bague d'accouplement côté poulie (7) sous l'action de la force centrifuge et à l'encontre d'une force de rappel, éléments qui, pour l'accouplement, s'engagent dans des logements d'éléments (9) prévus sur la bague d'accouplement côté arbre (6).

3. Dispositif de transmission de puissance selon la revendication 2, **caractérisé en ce que** les éléments d'accouplement (8) sont des billes qui s'engagent dans des logements d'éléments (9) en forme de calottes configurés sur la bague d'accouplement côté arbre (6).

4. Dispositif de transmission de puissance selon la revendication 2, **caractérisé en ce que** les éléments d'accouplement (8) sont des tenons, de préférence avec une extrémité libre arrondie, qui s'engagent dans des logements d'éléments (9), de préférence en forme de calottes, configurés sur la bague d'accouplement côté arbre (6).

5. Dispositif de transmission de puissance selon l'une quelconque des revendications 2 à 4, **caractérisé en ce que** chaque élément d'accouplement (8) est mobile à l'encontre d'un élément de ressort (10) produisant la force de rappel, notamment d'un ressort spiral.

6. Dispositif de transmission de puissance selon l'une quelconque des revendications 2 à 5, **caractérisé en ce que** des perçages (11) s'étendant radialement sont prévus sur la bague d'accouplement côté poulie (7), perçages dans chacun desquels est reçu un élément de ressort (10) produisant la force de rappel ainsi qu'un élément d'accouplement (8).

7. Dispositif de transmission de puissance selon l'une quelconque des revendications 2 à 6, **caractérisé en ce que** les éléments d'accouplement (8) sont disposés en étant répartis avec le même écartement.

8. Dispositif de transmission de puissance selon l'une quelconque des revendications 2 à 7, **caractérisé en ce qu'**il est prévu sur la bague d'accouplement côté arbre (6) une rainure de guidage (14) pour les éléments d'accouplement (8), rainure qui relie les logements d'éléments (9).

9. Dispositif de transmission de puissance selon la revendication 8, **caractérisé en ce que** la rainure de guidage (14) débouche dans chaque logement d'élément (9) par l'intermédiaire d'une rampe d'entrée (15).
